# EUROPEAN PATENT SPECIFICATION

(11) **EP 3 674 051 B1**
(45) Date of publication and mention of the grant of the patent: **02.07.2025**
(21) Application number: 19212393.3
(22) Date of filing: 29.11.2019
(51) Int. Cl.: B29C 44/02, B29C 44/34, B29C 35/02, B29C 35/08, B41M 3/06

(54) **THERMALLY EXPANDABLE SHEET, MANUFACTURING METHOD OF THERMALLY EXPANDABLE SHEET, AND SHAPED OBJECT**
THERMISCH EXPANDIERBARE FOLIE, HERSTELLUNGSVERFAHREN FÜR THERMISCH EXPANDIERBARE FOLIE UND FORMOBJEKT
FEUILLE THERMIQUEMENT EXPANSIBLE, PROCÉDÉ DE FABRICATION DE FEUILLE THERMIQUEMENT EXPANSIBLE ET OBJET FORMÉ

(30) Priority: 28.12.2018 JP 2018247004
(43) Date of publication of application: 01.07.2020
(73) Proprietor: Casio Computer Co., Ltd., Tokyo 151-8543 (JP)
(72) Inventor: MOROKUMA, Hiroshi, Tokyo, 205-8555 (JP); MITSUI, Satoshi, Tokyo, 205-8555 (JP); MOTOYANAGI, Yoshimune, Tokyo, 205-8555 (JP); HORIUCHI, Yuji, Tokyo, 205-8555 (JP)
(74) Representative: Plougmann Vingtoft a/s

(56) References cited:
- JP-A- S6 428 660
- US-A1- 2018 257 333
- US-A1- 2018 257 334
- US-A1- 2018 257 415

## Description

The present disclosure relates to a thermally expandable sheet that expands due to foaming in accordance with an absorbed heat amount, a manufacturing method of the thermally expandable sheet, and a shaped object using the thermally expandable sheet.

A thermally expandable sheet is known that has a thermal expansion layer formed on one surface of a base sheet, the thermal expansion layer including a thermally expandable material that foams and expands in accordance with an absorbed heat amount. Due to formation of a photothermal conversion layer that converts light to heat on this thermally expandable sheet and irradiation of the photothermal conversion layer with light, the thermal expansion layer can be expanded in part or on the whole. Moreover, methods are known for formation of a shaped object having three-dimensional unevenness on a thermally expandable sheet by causing a change of shape of the photothermal conversion layer (for example, see Unexamined Japanese Patent Application Kokai Publication No. S64-28660 and Unexamined Japanese Patent Application Kokai Publication No. 2001-150812).

US 2018/0257415 A1 discloses a thermally expandable sheet includes: a first thermally expansive layer that is formed on one side of a base and contains a first thermally expandable material and a first binder, the first thermally expansive layer having a first ratio of the first thermally expandable material with respect to the first binder; and a second thermally expansive layer that is formed on the first thermally expansive layer and contains a second thermally expandable material and a second binder, the second thermally expansive layer having a second ratio of the second thermally expandable material with respect to the second binder, wherein the first ratio is lower than the second ratio.

The shaped object formed using such a thermally expandable sheet may change in shape depending on the environment in which the shaped object is placed after shaping. In particular, when the shaped object is placed in an high-temperature environment, such as a 60°C environment, the shape of the shaped object may change due to the thermally expandable material expanding further, or due to shrinkage of the thermally expandable material due to excessive heat.

Therefore, a thermally expandable sheet, a manufacturing method of the thermally expandable sheet, and a shaped object utilizing the thermally expandable sheet are sought that enable suppression of the occurrence of deformation after shaping.

In consideration of the aforementioned circumstances, an objective of the present disclosure is to provide a thermally expandable sheet, a manufacturing method of the thermally expandable sheet, and a shaped object using the thermally expandable sheet that enable suppression of the occurrence of deformation after shaping.

In a first aspect of the present disclosure, an thermally expandable sheet includes a base and a thermal expansion layer comprising a binder arranged on one surface of the base and configured to be used in manufacture of a shaped object by swelling of at least a portion of the thermal expansion layer. The thermal expansion layer further includes a first thermally expandable material having a first expansion initiation temperature and a first maximum expansion temperature, and a second thermally expandable material having a second expansion initiation temperature and a second maximum expansion temperature. The first thermally expandable material and the second thermally expandable material are intermingled in the binder. The first expansion initiation temperature of the first thermally expandable material is set to be at least 35°C above the temperature of an environment in which the shaped object is to be placed. The second expansion initiation temperature of the second thermally expandable material is set to be at least 35°C above the temperature of an environment in which the shaped object is to be placed. The second maximum expansion temperature is set to be higher than the first maximum expansion temperature.

In a second aspect of the present disclosure, manufacturing method of a thermally expandable sheet for manufacturing a shaped object by swelling of at least a portion of an expansion layer that comprises a binder and is arranged on one surface of a base includes a thermal expansion layer forming step of forming the thermal expansion layer on the one surface of the base. In the thermal expansion layer forming step, the thermal expansion layer (12) is formed by applying, to the base (11), a coating liquid in which (i) a first thermally expandable material having a first expansion initiation temperature and a first maximum expansion temperature and (ii) a second thermally expandable material having a second expansion initiation temperature and a second maximum expansion temperature are intermingled in the binder are used in the thermal expansion layer forming step. The first expansion initiation temperature of the first thermally expandable material is set to be at least 35°C above the temperature of an environment in which the shaped object is to be placed. The second expansion initiation temperature of the second thermally expandable material is set to be at least 35°C above the temperature of an environment in which the shaped object is to be placed. The second maximum expansion temperature is set to be higher than the first maximum expansion temperature.

In a third aspect of the present disclosure, a shaped object includes a thermally expandable sheet having a base and a thermal expansion layer comprising a binder arranged on one surface of the base. At least a portion of the thermal expansion layer swells. The thermal expansion layer further includes a first thermally expandable material having a first expansion initiation temperature and a first maximum expansion temperature, and a second thermally expandable material having a second expansion initiation temperature and a second maximum expansion temperature. The first thermally expandable material and the second thermally expandable material are intermingled in the binder. The first expansion initiation temperature of the first thermally expandable material is set to be at least 35°C above the temperature of an environment in which the shaped object is to be placed. The second expansion initiation temperature of the second thermally expandable material is set to be at least 35°C above the temperature of an environment in which the shaped object is to be placed. The second maximum expansion temperature is set to be higher than the first maximum expansion temperature, and at least a portion of the thermal expansion layer is swollen.

A more complete understanding of this application can be obtained when the following detailed description is considered in conjunction with the following drawings, in which:
FIG. 1 is a cross-sectional view illustrating schematically a thermally expandable sheet according to an embodiment;
FIG. 2A illustrates schematically a manufacturing method of the thermally expandable sheet according to the embodiment;
FIG. 2B illustrates schematically the manufacturing method of the thermally expandable sheet according to the embodiment;
FIG. 3 is a chart for description of a relationship between heating temperature and particle size of the thermally expandable material;
FIG. 4 is a flowchart illustrating a manufacturing method of a shaped object according to the embodiment;
FIG. 5A is a cross-sectional view illustrating schematically the manufacturing method of the shaped object according to the embodiment;
FIG. 5B is another cross-sectional view illustrating schematically the manufacturing method of the shaped object according to the embodiment
FIG. 5C is yet another cross-sectional view illustrating schematically the manufacturing method of the shaped object according to the embodiment
FIG. 6 is a cross-sectional view illustrating schematically the shaped object according to the embodiment; and
FIG. 7 is a chart for description of a relationship between lightness-darkness of the thermal conversion layer and convexity height.

A thermally expandable sheet, a manufacturing method of the thermally expandable sheet, and a shaped object using the thermally expandable sheet are described in detail below with reference to drawings. In the present embodiment, the shaped object is formed by causing swelling by expansion of at least a portion of a thermal expansion layer of the thermally expandable sheet.

In the present embodiment, the shaped object is manufactured by using the swelling of the thermal expansion layer of the thermally expandable sheet. In the present specification, the term "shaped object" broadly includes shapes such as simple shapes, geometrical shapes, characters, decorations, or the like. The term "decorations" refers to objects that appeal to the aesthetic sense through visual and/or tactile sensation. The term "shaped (or molded)" is not limited to the simple formation of the shaped object, but rather is to be construed to also include concepts such as decorating and ornamenting. Further, the term "decorative shaped object" indicates a shaped object formed as a result of decoration or ornamentation.

The shaped object of the present embodiment has unevenness in a direction, such as the Z-axis direction, perpendicular to a standard surface taken to be a two-dimensional surface, such as the XY plane, within a three-dimensional space. Although such a shaped object is an example of a three-dimensional (3D) image, to distinguish this three-dimensional image from three-dimensional images formed using so-called 3D printer technology, the shaped object is called a 2.5-dimensional (2.5D) image or a pseudo-three-dimensional (pseudo-3D) image.

### Thermally Expandable Sheet

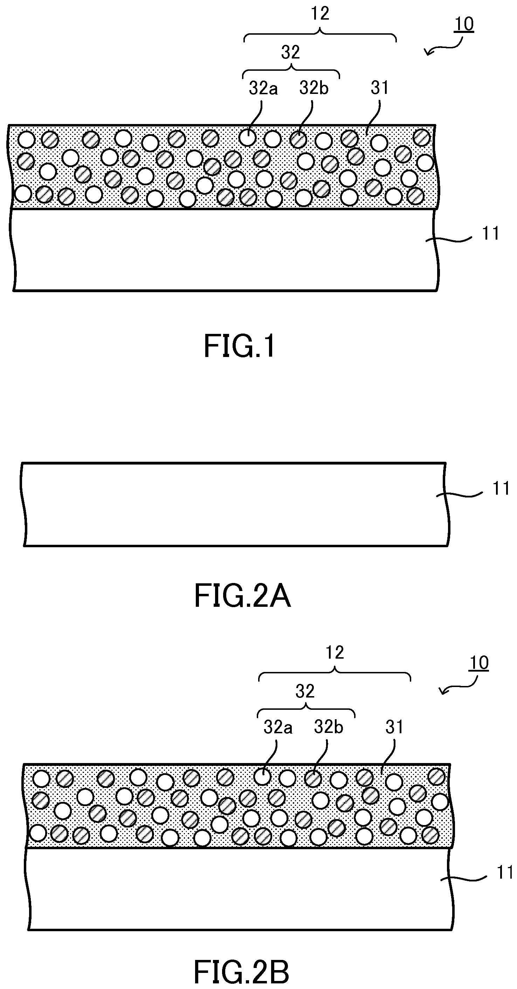

A thermally expandable sheet 10 according to the present embodiment is described below. As illustrated schematically in FIG. 1, the thermally expandable sheet 10 includes a base 11 and a thermal expansion layer 12. Convexities or unevennesses are formed on the surface of the thermally expandable sheet 10 by swelling of at least a portion of the thermal expansion layer 12. The shaped object can be expressed by a combination of height of such a convexity or unevenness, a position of formation thereof, or the like.

The base 11 is a sheet-like member that supports the thermal expansion layer 12. The thermal expansion layer 12 is formed on one side of the base 11, that is, on the upper surface as viewed in FIG. 1. A sheet, such as a film, made from paper such as high-quality paper, or a resin such as polyethylene terephthalate (PET), is used as the base 11. The paper is not limited to high-quality paper, and any generally-used paper may be used. Moreover, the resin is not limited to PET, and a freely-selected resin may be used. Examples that can be cited of the resin include polyolefin resins such as polyethylene or polypropylene, polyester resins, polyamide resins such as nylon, polyvinyl chloride resins, polyimide resins, silicone resins, or the like.

Moreover, the base 11 is provided with sufficient strength such that swelling does not occur toward the opposite side of the base 11, that is, downward as viewed in FIG. 1, when the thermal expansion layer 12 expands by overall or partial foaming. Thickness of the base 11 is 100 µm to 1,000 µm, without particular limitation. Moreover, the base 11 is provided with sufficient strength so that, during expansion of the thermal expansion layer 12, shape as a sheet is not lost by generation of wrinkles, formation of large undulations, or the like. In addition, the base 11 has sufficient heat resistance so as to withstand heat during foaming of the thermal expansion layer 12. The base 11 may further have elasticity.

As illustrated in FIG. 1, the thermal expansion layer 12 is provided on one surface of the base 11. The thermal expansion layer 12 is a layer that expands in size in accordance with a degree of heating, such as a heating temperature or a heating period; and a thermally expandable material 32, such as thermally expandable microcapsules or micro-powder, is dispersed in a binder 31. In the present embodiment, a first thermally expandable material 32a and a second thermally expandable material 32b are included in the thermally expandable material 32. The thermal expansion layer 12 is not limited to a single layer and may have multiple layers. Moreover, thickness of the thermal expansion layer 12 is 5 µm to 200 µm, without particular limitation.

Any thermoplastic resin, such as a vinyl acetate-type polymer or an acrylic-type polymer, may be used as the binder of the thermal expansion layer 12. A thermoplastic elastomer may be used as the binder. The thermoplastic elastomer may be selected from among polyvinylchloride, ethylene-propylene rubber (EPR), ethylene-vinyl acetate copolymer (EVA), styrene-type thermoplastic elastomer, olefin-type thermoplastic elastomer, urethane-type thermoplastic elastomer, and polyester-type thermoplastic elastomer, without particular limitation.

The thermally expandable material 32 encapsulates a foaming agent including propane, butane, or another low boiling point substance in shells made from a thermoplastic resin. The shells are formed from a thermoplastic resin such as, for example, polystyrene, polyvinyl chloride, polyvinylidene chloride, polyvinyl acetate, polyacrylic acid ester, polyacrylonitrile, polybutadiene, and copolymers thereof. Average particle size of the thermally expandable material 32 is about 5 µm to 50 µm, for example. When the thermally expandable material is heated to at least the temperature at which expansion begins, the shells made of resin soften, and the encapsulated low-boiling point volatile substance volatilizes, causing the shells to expand due to pressure in a balloon-like manner. Although dependent on characteristics of the used microcapsules, the particle size of the microcapsules increases to about five times the size prior to expansion. Further, variance exists in the particle size of the thermally expandable material 32.

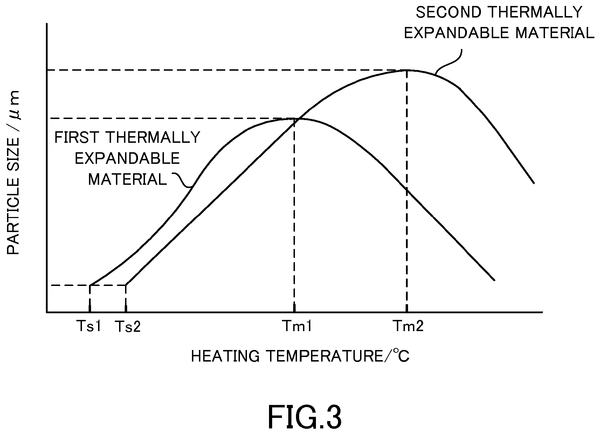

As illustrated in FIG. 3, the first thermally expandable material 32a expands due to softening of the shells and vaporization of the foaming agent when heated to at least an expansion initiation temperature (first expansion initiation temperature) Ts1. Upon heating to a temperature greater than or equal to the expansion initiation temperature Ts1 and less than or equal to a maximum expansion temperature (first maximum expansion temperature) Tm1, the first thermally expandable material 32a expands up to a state in which particle size thereof corresponds to the temperature of heating. The expansion initiation temperature Ts1 is the temperature at which expansion of the first thermally expandable material 32a starts, and the maximum expansion temperature Tm1 is a temperature at which the first thermally expandable material 32a is in a state in which the expanded particles have a maximum particle size. Upon heating to a temperature higher than the maximum expansion temperature Tm1, the first thermally expandable material 32a expands to the state thereof having the maximum particle size, and thereafter, shrinks to a state having a particle size corresponding to the heating temperature. A average particle size (D50) of the first thermally expandable material 32a is 10 µm to 18 µm, for example. For example, the expansion initiation temperature Ts1 of the first thermally expandable material 32a is 95°C to 105°C, and the maximum expansion temperature Tm1 is 125°C to 135°C.

As illustrated in FIG. 3, upon heating to at least an expansion initiation temperature (second expansion initiation temperature) Ts2, the second thermally expandable material 32b expands due to softening of the shells and volatilization of the foaming agent. In the case in which heating is performed to a temperature that is at least the expansion initiation temperature Ts2 and is no more than a maximum expansion temperature (second maximum expansion temperature) Tm2, in a manner similar to that of the first thermally expandable material 32a, expansion occurs until reaching a state having a certain particle size corresponding to the temperature of heating. Moreover, upon heating to a temperature higher than the maximum expansion temperature Tm2, after expanding up to the state that has the maximum particle size, the second thermally expandable material 32b shrinks down to a state that has a particle size corresponding to the heating temperature. In the present embodiment, the maximum expansion temperature Tm2 of the second thermally expandable material 32b is higher than the maximum expansion temperature Tm1 of the first thermally expandable material 32a. Moreover, the expansion initiation temperature Ts2 of the second thermally expandable material 32b may be higher than the expansion initiation temperature Ts1 of the first thermally expandable material 32a, and may be lower than the maximum expansion temperature Tm1 of the first thermally expandable material 32a. Specifically, the average particle size (D50) of the second thermally expandable material 32b is about 12 µm to 18 µm, for example. The expansion initiation temperature Ts2 of the second thermally expandable material 32b is 105°C to 115°C, for example; and the maximum expansion temperature Tm2 is 145°C to 155°C, for example.

The weight ratio of the binder 31 to the first thermally expandable material 32a to the second thermally expandable material 32b is 2:1:1, for example. As described below in detail, in the present embodiment, settling of a convexity 12a that occurs due to shrinkage of the first thermally expandable material 32a, is compensated for by the second thermally expandable material 32b, and thus height of the convexity 12a is maintained. Thus from the standpoint of stability of the shape of the convexity 12a, a weight ratio of the binder 31 to a total of the first thermally expandable material 32a and the second thermally expandable material 32b is preferably 4:1 to 1:1. Moreover, the weight ratio of the first thermally expandable material 32a to the second thermally expandable material 32b is not limited to 1:1. The weight ratio of the second thermally expandable material 32b to the first thermally expandable material 32a is preferably 0.2 to 4, inclusive.

Moreover, the expansion initiation temperature Ts1 of the first thermally expandable material 32a and the expansion initiation temperature Ts2 of the second thermally expandable material 32b are determined on the basis of temperature, including an anticipated temperature, of the environment in which a shaped object 20 is to be placed. Specifically, the expansion initiation temperature Ts1 and Ts2 may be higher than the temperature of the environment, that is, the "environmental temperature", in which the shaped object 20 is to be placed. Moreover, the expansion initiation temperatures Ts1 and Ts2 are each preferably at least 20°C higher than the environmental temperature, are further preferably at least 30°C above the environmental temperature; and yet further preferably are at least 35°C above the environmental temperature.

Moreover, the environment of placement is a environmental testing environment, for example. In this case, the "anticipated temperature" means the temperature of the environmental testing. In the environmental testing, for example, the shaped object 20 is placed for 120 hours within an environmental tester at 90% humidity and 60°C temperature, and change in the shaped object 20, such as change in height, is observed. The expansion initiation temperatures Ts1 and Ts2 are preferably at least 90°C, and are further preferably at least 95°C.

As described below in detail, the second thermally expandable material 32b compensates for settling of the convexity 12a that results from shrinkage of the first thermally expandable material 32a. In comparison to the maximum particle size of the first thermally expandable material 32a, the maximum particle size of the second thermally expandable material 32b may be smaller, the same, or larger. The maximum particle size of the second thermally expandable material 32b is preferably the same or larger in comparison to the first thermally expandable material 32a.

### Manufacturing Method of Thermally Expandable Sheet

The manufacturing method of the thermally expandable sheet 10 is described next with reference to FIGS. 2A and 2B.

Firstly, the base 11 is prepared (FIG. 2A). Roll paper, for example, is used as the base 11. The manufacturing method described below is not limited to roll-type processing, and sheet-type processing may be performed.

Next, the binder 31 and the thermally expandable material 32, that is, the thermally expandable microcapsules, are blended together, and a coating liquid for forming the thermal expansion layer 12 is prepared. At this time, the aforementioned first thermally expandable material 32a and the second thermally expandable material 32b are used as the thermally expandable material 32. In the present embodiment, the weight ratio of the binder 31 to the first thermally expandable material 32a to the second thermally expandable material 32b is 2:1:1, for example. Thereafter, the coating liquid is coated onto one surface of the base 11 by use of a publically-known coating device such as a bar coater, a roll coating, a spray coater, or the like. Thereafter, the coating is dried to form the thermal expansion layer 12 as illustrated in FIG. 2B. Further, in order to obtain a targeted thickness of the thermal expansion layer 12, the coating and drying of the coating liquid may be performed multiple times. Moreover, the thermal expansion layer 12 may be formed by a publically-known printing device such as a screen printer or the like.

Thereafter, in the case in which the roll-like base 11 is used, cutting thereof is performed to a desired size. The thermally expandable sheet 10 is manufactured by the above processing.

### Manufacturing Method of Shaped Object

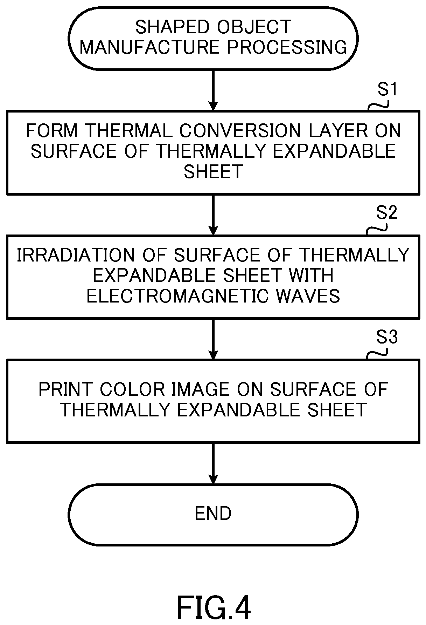

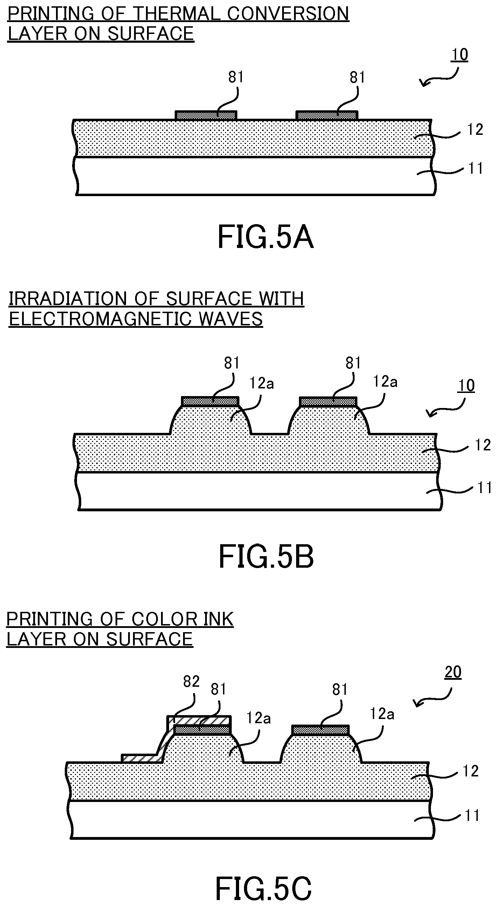

Next, processing to manufacture the shaped object 20 using the thermally expandable sheet 10 is described with reference to the flowchart illustrated in FIG. 4 and the cross-sectional views of the thermally expandable sheet 10 illustrated in FIGS. 5A to 5C.

Firstly, a device such as a printing device is used for forming the thermal conversion layer 81 on the surface of the thermally expandable sheet 10 (step S1). The thermal conversion layer 81 is a layer formed from an ink that includes an electromagnetic wave-to-heat conversion material, such as a black ink that includes carbon black. The printing device can be any publically-known such device such as an inkjet printer. In this case, the inkjet printer discharges black ink that includes carbon black on the surface of the thermally expandable sheet 10 in accordance with surface foaming data, that is, data for printing the thermal conversion layer 81, designated by a user. As a result, the thermal conversion layer 81 is formed on the thermal expansion layer 12 as illustrated in FIG. 5A. Further, although the thermal conversion layer 81 is illustrated as being formed on the thermal expansion layer 12 for ease of understanding, sometimes the thermal conversion layer 81 might not be formed as illustrated as a distinct layer. Moreover, the expansion height of the thermal expansion layer 12 is controlled in step S1 by lightness-darkness of the thermal conversion layer 81.

Secondly, the thermally expandable sheet 10 provided with the thermal conversion layer 81 is irradiated with the electromagnetic waves (step S2). The irradiation with the electromagnetic waves is performed using a halogen lamp, for example. For example, a device is used that has an electromagnetic wave irradiation means such as a halogen lamp provided within a housing, and the thermally expandable sheet 10 is transported under the electromagnetic wave irradiation means within the device. The halogen lamp irradiates the thermally expandable sheet 10 with the electromagnetic waves, that is, with light, in the near infrared region (750 to 1,400 nm wavelength), the visible light region (380 to 750 nm), or the middle infrared region (1,400 to 4,000 nm). Upon irradiation with the electromagnetic waves of the thermally expandable sheet 10 on which the thermal conversion layer 81, that is, the lightness-darkness image, is printed using the ink that includes the thermal conversion material, at the portion where the thermal conversion layer 81 is printed, the electromagnetic waves are converted to heat with higher efficiency in comparison to the portions where the lightness-darkness image is not printed. Thus within the thermally expandable sheet 10, the portion where the thermal conversion layer 81 is printed is mainly heated, and when the thermally expandable material 32 reaches the expansion initiation temperature, the expansion starts. A device other than the halogen lamp may be used as long as the device is capable of irradiation with the electromagnetic waves; the wavelength of the electromagnetic waves is not limited to the aforementioned ranges.

The thermal conversion material included in the thermal conversion layer 81 printed on the surface of the thermally expandable sheet 10 generates heat due to absorption of the electromagnetic waves with which the thermal conversion material is irradiated. As a result, the thermal conversion layer 81 generates heat, and as illustrated in FIG. 5B, within the thermal expansion layer 12 of the thermally expandable sheet 10, the region printed with the thermal conversion layer 81 expands and rises.

In the aforementioned manner, the maximum expansion temperature Tm2 of the second thermally expandable material 32b is high in comparison to the maximum expansion temperature Tm1 of the first thermally expandable material 32a. Thus even in the case in which the first thermally expandable material 32a expands to near the maximum particle size thereof in step S2, the second thermally expandable material 32b does not expand to the maximum particle size thereof, and the excessive-heating state is prevented.

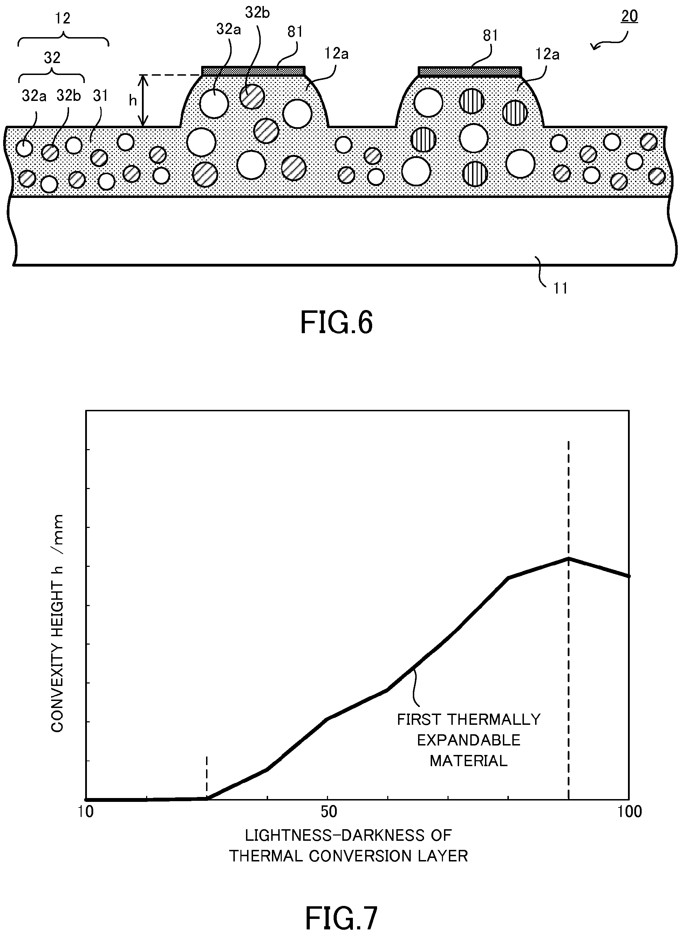

See FIG. 7, which illustrates the relationship between a height h of the convexity (corresponding to the convexity 12a illustrated in drawings such as FIG. 5B) formed on the thermal expansion layer and the lightness-darkness of the thermal conversion layer. FIG. 7 illustrates the case in which, for a sheet configured similarly to the thermally expandable sheet 10, the thermal expansion layer 12 is formed only by the first thermally expandable material 32a. Moreover, the thermal conversion layer, similarly to FIG. 5A, is formed on the surface side of the sheet. Lightness-darkness of the thermal conversion layer illustrated in FIG. 7 is controlled by a dot density, that is, by density of the thermal conversion material, of the ink printed in the step (step S1) to form the thermal conversion layer 81, and a lightness-darkness of " 100" indicates printing of the thermal conversion layer 81 at a maximum dot density. The thermal conversion layer 81 is irradiated with the electromagnetic waves that have a certain energy, that is, energy of a fixed value, in the expansion step (step S2), and thus lightness-darkness of the thermal conversion layer 81 is proportional to the heat amount imparted to the thermal expansion layer 12.

As illustrated in FIG. 7, the height h of the convexity increases as lightness-darkness of the thermal conversion layer 81 increases up to the lightness-darkness value of "90", that is, as the heat amount imparted to the thermal expansion layer 12 increases, for the thermal conversion layer. However, the height h decreases at lightness-darkness values at either side of "90". This means that at this value, the first thermally expandable material 32a is heated in excess of the maximum expansion temperature thereof (excessive-heating state), and that shrinkage then tends to occur.

As described below in detail, in the present embodiment, the second thermally expandable material 32b suppresses the settling of the convexity that occurs due to shrinkage of the first thermally expandable material 32a due to reaching the excessive-heating state, as illustrated at values of "90" and above in FIG. 7. Thus at the point in time when the first thermally expandable material 32a is expanded to the maximum particle size, the second thermally expandable material 32b preferably starts to expand. Therefore, the expansion initiation temperature Ts2 of the second thermally expandable material 32b preferably is lower than the maximum expansion temperature Tm1 of the first thermally expandable material 32a.

Thirdly, an image, that is, a color ink layer 82, is formed on the surface of the thermally expandable sheet 10 for which at least a portion of the thermal expansion layer 12 is expanded (step S3). The printing device can be any publically-known device such as an inkjet printer. In this case, the inkjet printer discharges a publically-known color ink on the surface of the thermally expandable sheet 10 in accordance with color image data, that is, data for printing the color ink layer 82, designated by the user. As a result, as illustrated in FIG. 5C, the color ink layer 82 is formed on the thermal expansion layer 12. Further, in the same manner as the thermal conversion layer 81, the color ink layer 82 sometimes may not form a distinct layer such as the illustrated layer. Depending on the shaped object 20, step S3 may be omitted.

The shaped object 20 using the thermally expandable sheet 10 is manufactured by the aforementioned processing.

### Shaped Object

A cross-sectional view of the shaped object 20 according to the present embodiment is illustrated in FIG. 6. For the shaped object 20, at least a portion of the thermal expansion layer 12 is expanded to form the convexity 12a. FIG. 6 illustrates an example in which, at the convexity 12a, the first thermally expandable material 32a is expanded to near the maximum particle size.

In the shaped object 20 illustrated in FIG. 7, the first thermally expandable material 32a is expanded to the maximum swelling of the thermal expansion layer 12 by the first thermally expandable material 32a, as occurs at the lightness-darkness of "90" in the thermal conversion layer illustrated in FIG. 7. However, although the second thermally expandable material 32b expands, such expansion does not reach the maximum particle size.

In the case in which the first thermally expandable material 32a is made to expand up to near the maximum particle size as illustrated in FIG. 6, depending on the environment in which the shaped object 20 is placed, the first thermally expandable material 32a may reach the excessive-heating state and may shrink. However, at the stage at which shrinkage of the first thermally expandable material 32a starts, the second thermally expandable material 32b maintains the expanded state, or expands further, and height of the convexity 12a can be maintained by the second thermally expandable material 32b. Due to such operation, settling of the convexity 12a of the shaped object 20 can be prevented, and deformation of the shaped object 20 can be prevented.

Moreover, the expansion initiation temperature Ts1 of the first thermally expandable material 32a and the expansion initiation temperature Ts2 of the second thermally expandable material 32b of the shaped object 20 of the present embodiment are set higher than the temperature anticipated for the environment in which the shaped object 20 is to be placed. Thus, in contrast to FIG. 6, in the case in which the first thermally expandable material 32a is expanded to near the maximum particle size, the convexity 12a is maintained at a nearly unchanged height.

For example, a sheet is prepared that has the thermal expansion layer using only the aforementioned first thermally expandable material 32a, the thermal conversion layer at multiple concentrations is then formed as illustrated in FIG. 7, the thermal expansion layer is then expanded, and environmental testing is then performed at 60°C and 90% humidity for 120 hours. In this case, at the portion (corresponding to values of "10" to "80" in FIG. 7) of the concentrations immediately prior to the maximum expansion height (corresponding to the height h of FIG. 6) of the thermal expansion layer, hardly any change in height occurs. However, at the concentration where the expansion height is maximum (corresponding to the value "90" in FIG. 7), lowering of height after the environmental testing occurs. This is considered to be due to the first thermally expandable material 32a reaching the excessive-heating state.

In contrast, even at the portion where the expansion height is maximum, the shaped object 20 of the present embodiment can maintain expansion height due to the presence of the second thermally expandable material 32b.

Therefore, the shaped object 20 of the present embodiment can suppress shape change after shape formation.

According to the present embodiment, the expansion initiation temperatures Ts1 and Ts2 are higher than the temperature (environmental temperature) of the environment in which the shaped object 20 is to be placed, and furthermore, the thermally expandable sheet 10 includes in the thermal expansion layer 12 the first thermally expandable material 32a and the second thermally expandable material 32b that have the different maximum expansion temperatures Tm1 and Tm2, and thus change in the shape of the shaped object 20 can be suppressed.

The present disclosure is not limited to the aforementioned embodiments, and various types of modifications and applications are possible. The thermally expandable material is not limited to the case of including the first thermally expandable material and the second thermally expandable material, but rather may include three or more types of the thermally expandable material. In this case, the expansion initiation temperature of the thermally expandable material that is further included is also high in comparison to the environmental temperature. Furthermore, the maximum expansion temperature of the further-included thermally expandable material may be higher than the maximum expansion temperature of the second thermally expandable material, and may be intermediate between the maximum expansion temperature of the first thermally expandable material and the maximum expansion temperature of the second thermally expandable material.

An example is cited in the aforementioned embodiments in which the thermal conversion layer is formed that includes the electromagnetic wave-to-heat conversion material, that irradiates the thermal conversion layer with the electromagnetic waves, and that heats a specified region of the thermal expansion layer. However, the method for causing expansion of the thermal expansion layer is not limited to that of the aforementioned embodiments. For example, the thermal expansion layer can be heated by a device such as a heater.

Moreover, the thermal expansion layer 12 of the aforementioned thermally expandable sheet 10 may include an ink receiving layer on the surface, that is, the surface appearing upward in FIG. 1. The ink receiving layer is a layer for receiving and fixing of ink of the inkjet printer. In accordance with the ink used in the printing step, the ink receiving layer is formed using publically-known materials. For example, in the case of use of a water-based ink, the ink receiving layer of a type that receives the ink by use of voids is formed by use of porous silica, for example. In the case in which the ink is of the type that swells to receive the ink, the ink receiving layer is formed, for example, from a resin selected from among polyvinyl alcohol (PVA, polyesters, polyurethanes, polyacrylic resins, or the like. In a similar manner, the base 11 may be provided with the ink receiving layer at the backside, that is, the lower surface as viewed in FIG. 1.

Moreover, in the aforementioned embodiments, an example is cited in which the thermal conversion layer 81 is formed on the surface side, that is, above the thermal expansion layer 12 illustrated in FIG. 1, of the thermally expandable sheet 10. However, although an example is cited in which the thermal expansion layer 12 is expanded, the method of causing expansion of the thermal expansion layer 12 is not limited to that of this example. For example, the thermal conversion layer 81 may be formed on the surface of the backside of the thermally expandable sheet 10, that is, on the lower surface of the base 11 as illustrated in FIG. 1. In addition, a thermal conversion layer 81 can be formed on the surfaces of the front side and backside of the thermally expandable sheet 10, and each of the thermal conversion layers 81 can be irradiated with the electromagnetic waves. Also, the thermally expandable sheet 10 may be irradiated with the electromagnetic waves without formation of the thermal conversion layer 81, thereby causing expansion of the thermal expansion layer 12.

Also, the thermal conversion layer 81 is not necessarily formed directly on the thermal expansion layer 12. For example, a film may be provided on the outermost surface of the thermal expansion layer 12, and the thermal conversion layer 81 may be formed on this film. By releasable attachment of the film, after use of the thermal conversion layer 81, removal is possible with the film from the thermally expandable sheet 10. Similar use is possible in the case in which the thermal conversion layer is formed on the backside of the base 11.

Each of the drawings used in the various embodiments is used for description of the embodiment. Therefore, thicknesses of each of the layers of the thermally expandable sheet are freely selected, and the layers are not intended to be understood to be limited to being formed in the proportions illustrated in the drawings. Moreover, the terms "front" and "back" are used for description and are not intended to be understood to limit the method of use or the like of the shaped object.

The foregoing describes some example embodiments for explanatory purposes. Although the foregoing discussion has presented specific embodiments, persons skilled in the art will recognize that changes may be made in form and detail without departing from the scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

## Claims

1. A thermally expandable sheet (10) comprising:
a base (11); and
a thermal expansion layer (12) comprising a binder (31) arranged on one surface of the base (11) and configured to be used in manufacture of a shaped object (20) by swelling of at least a portion of the thermal expansion layer (12), the thermally expandable sheet (10) being **characterized in that**
the thermal expansion layer (12) further comprises
a first thermally expandable material (32a) having a first expansion initiation temperature (Ts1) and a first maximum expansion temperature (Tm1), and
a second thermally expandable material (32b) having a second expansion initiation temperature (Ts2) and a second maximum expansion temperature (Tm2),
the first thermally expandable material (32a) and the second thermally expandable material (32b) are intermingled in the binder (31),
the first expansion initiation temperature (Ts1) of the first thermally expandable material (32a) is set to be at least 35°C above the temperature of an environment in which the shaped object (20) is to be placed, and
the second expansion initiation temperature (Ts2) of the second thermally expandable material (32b) is set to be at least 35°C above the temperature of an environment in which the shaped object (20) is to be placed, and
the second maximum expansion temperature (Tm2) is set to be higher than the first maximum expansion temperature (Tm1).

2. The thermally expandable sheet (10) according to claim 1, wherein
the first expansion initiation temperature (Ts1) of the first thermally expandable material (32a) is set to be lower than the second expansion initiation temperature (Ts2).

3. The thermally expandable sheet (10) according to claim 1 or 2, wherein
the second expansion initiation temperature (Ts2) of the second thermally expandable material (32b) is set to be lower than the first maximum expansion temperature (Tm1).

4. The thermally expandable sheet (10) according to any one of claims 1 to 3, wherein
the binder (31) is a thermoplastic resin, and
a weight ratio of the binder (31) to the first thermally expandable material (32a) to the second thermally expandable material (32b) is 2:1:1.

5. The thermally expandable sheet (10) according to any one of claims 1 to 3, wherein
the thermal expansion layer (12) further comprises a binder (31) that is a thermoplastic resin, and
a weight ratio of the binder (31) to a total of the first thermally expandable material (32a) and the second thermally expandable material (32b) is 4:1 to 1:1.

6. The thermally expandable sheet (10) according to any one of claims 1 to 5, wherein
a weight ratio of the second thermally expandable material (32b) to the first thermally expandable material (32a) is 0.2 to 4, inclusive.

7. A manufacturing method of a thermally expandable sheet (10) for manufacturing a shaped object (20) by swelling of at least a portion of a thermal expansion layer (12) that comprises a binder (31) and is arranged on one surface of a base (11), the method comprising:
a thermal expansion layer forming step of forming the thermal expansion layer (12) on the one surface of the base (11), the method being **characterized in that**
in the thermal expansion layer forming step, the thermal expansion layer (12) is formed by applying, to the base (11), a coating liquid in which (i) a first thermally expandable material (32a) having a first expansion initiation temperature (Ts1) and a first maximum expansion temperature (Tm1) and (ii) a second thermally expandable material (32b) having a second expansion initiation temperature (Ts2) and a second maximum expansion temperature (Tm2) are intermingled in the binder (31),
the first expansion initiation temperature (Ts1) of the first thermally expandable material (32a) is set to be at least 35°C above the temperature of an environment in which the shaped object (20) is to be placed, and
the second expansion initiation temperature (Ts2) of the second thermally expandable material (32b) is set to be at least 35°C above the temperature of an environment in which the shaped object (20) is to be placed, and the second maximum expansion temperature (Tm2) is set to be higher than the first maximum expansion temperature (Tm1).

8. The manufacturing method according to claim 7, wherein
the first expansion initiation temperature (Ts1) of the first thermally expandable material (32a) is set to be lower than the second expansion initiation temperature (Ts2).

9. The manufacturing method according to claim 7 or 8, wherein
the second expansion initiation temperature (Ts2) of the second thermally expandable material (32b) is set to be lower than the first maximum expansion temperature (Tm1).

10. The manufacturing method according to any one of claims 7 to 9, wherein
the binder (31) is a thermoplastic resin, and
a weight ratio of the binder (31) to the first thermally expandable material (32a) to the second thermally expandable material (32b) is 2:1:1.

11. The manufacturing method according to any one of claims 7 to 9, wherein
the thermal expansion layer (12) comprises a binder (31) that is a thermoplastic resin, and
a weight ratio of the binder (31) to a total of the first thermally expandable material (32a) and the second thermally expandable material (32b) is 4:1 to 1:1.

12. The manufacturing method according to any one of claims 7 to 11, wherein
a weight ratio of the second thermally expandable material (32b) to the first thermally expandable material (32a) is 0.2 to 4, inclusive.

13. A shaped object (20) comprising:
a thermally expandable sheet (10) having a base (11) and a thermal expansion layer (12) comprising a binder (31) arranged on one surface of the base (11), the shaped object (20) being **characterized in that** the thermal expansion layer (12) further comprises
a first thermally expandable material (32a) having a first expansion initiation temperature (Ts1) and a first maximum expansion temperature (Tm1), and
a second thermally expandable material (32b) having a second expansion initiation temperature (Ts2) and a second maximum expansion temperature (Tm2),
the first thermally expandable material (32a) and the second thermally expandable material (32b) are intermingled in the binder (31),
the first expansion initiation temperature (Ts1) of the first thermally expandable material (32a) is set to be at least 35°C above the temperature of an environment in which the shaped object (20) is to be placed, and
the second expansion initiation temperature (Ts2) of the second thermally expandable material (32b) is set to be at least 35°C above the temperature of an environment in which the shaped object (20) is to be placed,, and the second maximum expansion temperature (Tm2) is set to be higher than the first maximum expansion temperature (Tm1), and
at least a portion of the thermal expansion layer (12) is swollen by expansion.

14. The shaped object (20)according to claim 13, wherein
a weight ratio of the second thermally expandable material (32b) to the first thermally expandable material (32a) is 0.2 to 4, inclusive.

15. The shaped object (20) according to claim 14, wherein
the binder (31) is a thermoplastic resin, and
a weight ratio of the binder (31) to the first thermally expandable material (32a) to the second thermally expandable material (32b) is 2: 1: 1.

## Patentansprüche

1. Thermisch expandierbare Folie (10), umfassend:
eine Basis (11); und
eine thermische Expansionsschicht (12), die ein Bindemittel (31) umfasst, das auf einer Oberfläche der Basis (11) angeordnet ist und konfiguriert ist, um bei der Herstellung eines Formobjekts (20) durch Aufquellen mindestens eines Abschnitts der thermischen Expansionschicht (12) verwendet zu werden, wobei die thermisch expandierbare Folie (10) **dadurch gekennzeichnet ist, dass**
die thermische Expansionsschicht (12) weiter folgendes umfasst
ein erstes thermisch expandierbares Material (32a), das eine erste Expansionsinitiationstemperatur (Ts1) und eine erste maximale Expansionstemperatur (Tm1) aufweist, und
ein zweites thermisch expandierbares Material (32b), das eine zweite Expansionsinitiationstemperatur (Ts2) und eine zweite maximale Expansionstemperatur (Tm2) aufweist,
wobei das erste thermisch expandierbare Material (32a) und das zweite thermisch expandierbare Material (32b) in dem Bindemittel (31) miteinander vermischt sind,
wobei die erste Expansionsinititationstemperatur (Ts1) des ersten thermisch expandierbaren Materials (32a) auf mindestens 35°C über der Temperatur einer Umgebung eingestellt ist, in der das Formobjekt (20) platziert werden soll, und
die zweite Expansionsinititationstemperatur (Ts2) des zweiten thermisch expandierbaren Materials (32b) auf mindestens 35°C über der Temperatur einer Umgebung eingestellt ist, in der das Formobjekt (20) platziert werden soll, und
die zweite maximale Expansionstemperatur (Tm2) höher eingestellt ist als die erste maximale Expasionstemperatur (Tm1).

2. Thermisch expandierbare Folie (10) nach Anspruch 1, wobei
die erste Expansionsinitiationstemperatur (Ts1) des ersten thermisch expandierbaren Materials (32a) niedriger eingestellt ist als die zweite Expansionsinitiationstemperatur (Ts2).

3. Thermisch expandierbare Folie (10) nach Anspruch 1 oder 2, wobei
die zweite Expansionsinitiationstemperatur (Ts2) des zweiten thermisch expandierbaren Materials (32b) niedriger eingestellt ist als die erste maximale Expansionstemperatur (Tm1).

4. Thermisch expandierbare Folie (10) nach einem der Ansprüche 1 bis 3, wobei
das Bindemittel (31) ein thermoplastisches Harz ist, und
ein Gewichtsverhältnis des Bindemittels (31) zu dem ersten thermisch expandierbaren Material (32a) zu dem zweiten thermisch expandierbaren Material (32b) 2:1:1 ist.

5. Thermisch expandierbare Folie (10) nach einem der Ansprüche 1 bis 3, wobei
die thermische Expansionsschicht (12) weiter ein Bindemittel (31) umfasst, das ein thermoplastisches Harz ist, und
ein Gewichtsverhältnis des Bindemittels (31) zur Gesamtheit des ersten thermisch expandierbaren Materials (32a) und des zweiten thermisch expandierbaren Materials (32b) 4:1 bis 1:1 ist.

6. Thermisch expandierbare Folie (10) nach einem der Ansprüche 1 bis 5, wobei
ein Gewichtsverhältnis des zweiten thermisch expandierbaren Materials (32b) zu dem ersten thermisch expandierbaren Material (32a) 0,2 bis einschließlich 4 ist.

7. Herstellungsverfahren einer thermisch expandierbaren Folie (10) zur Herstellung eines Formobjekts (20) durch Aufquellen mindestens eines Abschnitts einer thermischen Expansionschicht (12), die ein Bindemittel (31) umfasst, und auf einer Oberfläche einer Basis (11) angeordnet ist, wobei das Verfahren folgendes umfasst:
einen thermischen Expansionsschichtausbildungsschritt zum Ausbilden der thermischen Expansionsschicht (12) auf der einen Oberfläche der Basis (11), wobei das Verfahren **dadurch gekennzeichnet ist, dass**
in dem thermischen Expansionsschichtausbildungsschritt die thermische Expansionsschicht (12) durch Aufbringen einer Beschichtungsflüssigkeit auf die Basis (11) ausgebildet wird, in der (i) ein erstes thermisch expandierbares Material (32a), das eine erste Expansionsinitiationstemperatur (Ts1) und eine erste maximale Expansionstemperatur (Tm1) aufweist, und (ii) ein zweites thermisch expandierbares Material (32b), das eine zweite Expansionsinitiationstemperatur (Ts2) und eine zweite maximale Expansionstemperatur (Tm2) aufweist, in dem Bindemittel (31) vermischt sind,
die erste Expansionsinitiationstemperatur (Ts1) des ersten thermisch expandierbaren Materials (32a) auf mindestens 35°C über der Temperatur einer Umgebung eingestellt ist, in der das Formobjekt (20) platziert werden soll, und
die zweite Expansionsinitiationstemperatur (Ts2) des zweiten thermisch expandierbaren Materials (32b) auf mindestens 35°C über der Temperatur einer Umgebung eingestellt ist, in der das Formobjekt (20) platziert werden soll, und die zweite maximale Expansionstemperatur (Tm2) auf einen höheren Wert als die erste maximale Expansionstemperatur (Tm1) eingestellt ist.

8. Herstellungsverfahren nach Anspruch 7, wobei
die erste Expansionsinitiationstemperatur (Ts1) des ersten thermisch expandierbaren Materials (32a) niedriger eingestellt wird als die zweite Expansionsinitiationstemperatur (Ts2).

9. Herstellungsverfahren nach Anspruch 7 oder 8, wobei
die zweite Expansionsinitiationstemperatur (Ts2) des zweiten thermisch expandierbaren Materials (32b) niedriger eingestellt wird als die erste maximale Expansionstemperatur (Tm1).

10. Herstellungsverfahren nach einem der Ansprüche 7 bis 9, wobei
das Bindemittel (31) ein thermoplastisches Harz ist, und
ein Gewichtsverhältnis des Bindemittels (31) zu dem ersten thermisch expandierbaren Material (32a) zu dem zweiten thermisch expandierbaren Material (32b) 2:1:1 ist.

11. Herstellungsverfahren nach einem der Ansprüche 7 bis 9, wobei
die thermische Expansionsschicht (12) ein Bindemittel (31) umfasst, das ein thermoplastisches Harz ist, und
ein Gewichtsverhältnis des Bindemittels (31) zur Gesamtheit des ersten thermisch expandierbaren Materials (32a) und des zweiten thermisch expandierbaren Materials (32b) 4:1 bis 1:1 ist.

12. Herstellungsverfahren nach einem der Ansprüche 7 bis 11, wobei
ein Gewichtsverhältnis des zweiten thermisch expandierbaren Materials (32b) zu dem ersten thermisch expandierbaren Material (32a) 0,2 bis einschließlich 4 ist.

13. Formobjekt (20), umfassend:
eine thermisch expandierbare Folie (10), die eine Basis (11) aufweist, und eine thermische Expansionsschicht (12), die ein Bindemittel (31)umfasst, das auf einer Oberfläche der Basis (11) angeordnet ist, wobei das Formobjekt (20) **dadurch gekennzeichnet ist, dass** die thermische Expansionsschicht (12) weiter folgendes umfasst
ein erstes thermisch expandierbares Material (32a), das eine erste Expansionsinitiationstemperatur (Ts1) und eine erste maximale Expansionstemperatur (Tm1) aufweist, und
ein zweites thermisch expandierbares Material (32b), das eine zweite Expansionsinitiationstemperatur (Ts2) und eine zweite maximale Expansionstemperatur (Tm2) aufweist,
wobei das erste thermisch expandierbare Material (32a) und das zweite thermisch expandierbare Material (32b) in dem Bindemittel (31) miteinander vermischt sind,
wobei die erste Expansionsinitiationstemperatur (Ts1) des ersten thermisch expandierbaren Materials (32a) auf mindestens 35°C über der Temperatur einer Umgebung eingestellt ist, in der das Formobjekt (20) platziert werden soll, und
die zweite Expansionsinitiationstemperatur (Ts2) des zweiten thermisch expandierbaren Materials (32b) auf mindestens 35°C über der Temperatur einer Umgebung eingestellt ist, in der das Formobjekt (20) platziert werden soll, und die zweite maximale Expansionstemperatur (Tm2) höher eingestellt ist als die erste maximale Expansionstemperatur (Tm1), und
mindestens ein Abschnitt der thermischen Expansionsschicht (12) durch Expansion aufgequollen ist.

14. Formobjekt (20) nach Anspruch 13, wobei
ein Gewichtsverhältnis des zweiten thermisch expandierbaren Materials (32b) zu dem ersten thermisch expandierbaren Material (32a) 0,2 bis einschließlich 4 ist.

15. Formobjekt (20) nach Anspruch 14, wobei
das Bindemittel (31) ein thermoplastisches Harz ist, und
ein Gewichtsverhältnis des Bindemittels (31) zu dem ersten thermisch expandierbaren Material (32a) zu dem zweiten thermisch expandierbaren Material (32b) 2:1:1 ist.

## Revendications

1. Feuille thermiquement expansible (10) comprenant :
une base (11) ; et
une couche d'expansion thermique (12) comprenant un liant (31), disposée sur une surface de la base (11) et conçue pour être utilisée dans la fabrication d'un objet formé (20), par gonflement d'au moins une partie de la couche d'expansion thermique (12), la feuille thermiquement expansible (10) étant **caractérisée en ce que**
la couche d'expansion thermique (12) comprend en outre
un premier matériau thermiquement expansible (32a) ayant une première température de début d'expansion (Ts1) et une première température d'expansion maximale (Tm1), et
un second matériau thermiquement expansible (32b) ayant une seconde température de début d'expansion (Ts2) et une seconde température d'expansion maximale (Tm2),
le premier matériau thermiquement expansible (32a) et le second matériau thermiquement expansible (32b) sont entremêlés dans le liant (31),
la première température de début d'expansion (Ts1) du premier matériau thermiquement expansible (32a) est établie pour être supérieure d'au moins 35 °C à la température d'un environnement dans lequel l'objet formé (20) est destiné à être placé, et
la seconde température de début d'expansion (Ts2) du second matériau thermiquement expansible (32b) est établie pour être supérieure d'au moins 35 °C à la température d'un environnement dans lequel l'objet formé (20) est destiné à être placé, et
la seconde température d'expansion maximale (Tm2) est établie pour être supérieure à la première température d'expansion maximale (Tm1).

2. Feuille thermiquement expansible (10) selon la revendication 1, dans laquelle
la première température de début d'expansion (Ts1) du premier matériau thermiquement expansible (32a) est établie pour être inférieure à la seconde température de début d'expansion (Ts2).

3. Feuille thermiquement expansible (10) selon la revendication 1 ou 2, dans laquelle
la seconde température de début d'expansion (Ts2) du second matériau thermiquement expansible (32b) est établie pour être inférieure à la première température d'expansion maximale (Tm1).

4. Feuille thermiquement expansible (10) selon l'une quelconque des revendications 1 à 3, dans laquelle
le liant (31) est une résine thermoplastique, et
un rapport en poids du liant (31) au premier matériau thermiquement expansible (32a) au second matériau thermiquement expansible (32b) est 2:1:1.

5. Feuille thermiquement expansible (10) selon l'une quelconque des revendications 1 à 3, dans laquelle
la couche d'expansion thermique (12) comprend en outre un liant (31) qui est une résine thermoplastique, et
un rapport en poids du liant (31) à un total du premier matériau thermiquement expansible (32a) et du second matériau thermiquement expansible (32b) vaut de 4:1 à 1:1.

6. Feuille thermiquement expansible (10) selon l'une quelconque des revendications 1 à 5, dans laquelle
un rapport en poids du second matériau thermiquement expansible (32b) au premier matériau thermiquement expansible (32a) vaut de 0,2 à 4, inclus.

7. Procédé de fabrication d'une feuille thermiquement expansible (10) pour la fabrication d'un objet formé (20), par gonflement d'au moins une partie d'une couche d'expansion thermique (12) qui comprend un liant (31) et est disposée sur une surface d'une base (11), le procédé comprenant :
une étape de formation de couche d'expansion thermique, consistant à former la couche d'expansion thermique (12) sur ladite une surface de la base (11), le procédé étant **caractérisé en ce que**
dans l'étape de formation de couche d'expansion thermique, la couche d'expansion thermique (12) est formée par application, sur la base (11), d'un liquide de revêtement dans lequel sont entremêlés dans le liant (31) (i) un premier matériau thermiquement expansible (32a) ayant une première température de début d'expansion (Ts1) et une première température d'expansion maximale (Tm1) et (ii) un second matériau thermiquement expansible (32b) ayant une seconde température de début d'expansion (Ts2) et une seconde température d'expansion maximale (Tm2),
la première température de début d'expansion (Ts1) du premier matériau thermiquement expansible (32a) est établie pour être supérieure d'au moins 35 °C à la température d'un environnement dans lequel l'objet formé (20) est destiné à être placé, et
la seconde température de début d'expansion (Ts2) du second matériau thermiquement expansible (32b) est établie pour être supérieure d'au moins 35 °C à la température d'un environnement dans lequel l'objet formé (20) est destiné à être placé, et la seconde température d'expansion maximale (Tm2) est établie pour être supérieure à la première température d'expansion maximale (Tm1).

8. Procédé de fabrication selon la revendication 7, dans lequel
la première température de début d'expansion (Ts1) du premier matériau thermiquement expansible (32a) est établie pour être inférieure à la seconde température de début d'expansion (Ts2).

9. Procédé de fabrication selon la revendication 7 ou 8, dans lequel
la seconde température de début d'expansion (Ts2) du second matériau thermiquement expansible (32b) est établie pour être inférieure à la première température d'expansion maximale (Tm1).

10. Procédé de fabrication selon l'une quelconque des revendications 7 à 9, dans lequel
le liant (31) est une résine thermoplastique, et
un rapport en poids du liant (31) au premier matériau thermiquement expansible (32a) au second matériau thermiquement expansible (32b) est 2:1:1.

11. Procédé de fabrication selon l'une quelconque des revendications 7 à 9, dans lequel
la couche d'expansion thermique (12) comprend un liant (31) qui est une résine thermoplastique, et
un rapport en poids du liant (31) à un total du premier matériau thermiquement expansible (32a) et du second matériau thermiquement expansible (32b) vaut de 4:1 à 1:1.

12. Procédé de fabrication selon l'une quelconque des revendications 7 à 11, dans lequel
un rapport en poids du second matériau thermiquement expansible (32b) au premier matériau thermiquement expansible (32a) vaut de 0,2 à 4, inclus.

13. Objet formé (20) comprenant :
une feuille thermiquement expansible (10) comportant une base (11) et une couche d'expansion thermique (12) comprenant un liant (31), disposée sur une surface de la base (11), l'objet formé (20) étant **caractérisé en ce que** la couche d'expansion thermique (12) comprend en outre
un premier matériau thermiquement expansible (32a) ayant une première température de début d'expansion (Ts1) et une première température d'expansion maximale (Tm1), et
un second matériau thermiquement expansible (32b) ayant une seconde température de début d'expansion (Ts2) et une seconde température d'expansion maximale (Tm2),
le premier matériau thermiquement expansible (32a) et le second matériau thermiquement expansible (32b) sont entremêlés dans le liant (31),
la première température de début d'expansion (Ts1) du premier matériau thermiquement expansible (32a) est établie pour être supérieure d'au moins 35 °C à la température d'un environnement dans lequel l'objet formé (20) est destiné à être placé, et
la seconde température de début d'expansion (Ts2) du second matériau thermiquement expansible (32b) est établie pour être supérieure d'au moins 35 °C à la température d'un environnement dans lequel l'objet formé (20) est destiné à être placé, et la seconde température d'expansion maximale (Tm2) est établie pour être supérieure à la première température d'expansion maximale (Tm1), et
au moins une partie de la couche d'expansion thermique (12) est gonflée par expansion.

14. Objet formé (20) selon la revendication 13, dans lequel
un rapport en poids du second matériau thermiquement expansible (32b) au premier matériau thermiquement expansible (32a) vaut de 0,2 à 4, inclus.

15. Objet formé (20) selon la revendication 14, dans lequel
le liant (31) est une résine thermoplastique, et
un rapport en poids du liant (31) au premier matériau thermiquement expansible (32a) au second matériau thermiquement expansible (32b) est 2:1:1.
